# EUROPEAN PATENT SPECIFICATION

(11) **EP 4 585 812 B1**
(45) Date of publication and mention of the grant of the patent: **23.09.2026**
(21) Application number: 24151476.9
(22) Date of filing: 11.01.2024
(51) Int. Cl.: F16B 15/06, F16B 15/02

(54) **REMOVABLE PIN AND PROCESS FOR REMOVING SUCH PIN**
ENTFERNBARER STIFT UND VERFAHREN ZUM ENTFERNEN EINES SOLCHEN STIFTS
BROCHE AMOVIBLE ET PROCÉDÉ POUR ENLEVER UNE TELLE BROCHE

(43) Date of publication of application: 16.07.2025
(73) Proprietor: Newfrey LLC, New Britain, CT 06053 (US)
(72) Inventor: DEMIRCIOGLU, Orhan, 35394 Gießen (DE); MATHIA, Steffen, 35394 Gießen (DE); REIS, Christian, 35394 Gießen (DE); SARTISSON, Vadim, 35394 Gießen (DE); STOCK, Maximilian, 35394 Gießen (DE)
(74) Representative: SBD IPAdmin

(56) References cited:
- CN-U- 201 866 039
- US-B2- 7 520 710
- US-B2- 8 375 549

## Description

The present invention relates to a pin for establishing a removable connection between at least two components, without preformed hole(s).

It is known from the state of the art to join at least two components made from a conventional material, for example conventional steel of customary strength, without pre-formed hole, for example by clinching, punch riveting, self-piercing riveting flow drill or direct screwing. Joining methods for components without pre-formed holes are however mostly limited to components of conventional strength, since the maximum forces for such joining devices are reduced and they are not able to pierce or penetrate any kind of material or the strength of the joining elements may not be sufficient and/or are limited to processes allowing a two-sided access.

Recently, in particular in the automotive industry, the use of one-sided joining technologies without preformed holes has been increasing. Manufacturing methods, to join high strength material or to limit stress and cracks in the workpieces to be joined have been further developed. For instance, DE102016118109A1 from the applicant discloses a method for joining at least one component to a second component without pre-formed (for example pre-drilled or pre-punched) hole or holes in the components prior to the joining.

EP4253771A1 discloses notably a fastening element adapted to be used with the joining method disclosed in DE102016118109A1, and can notably be used to join high strength materials. More particularly, the fastening element disclosed in EP4253771A1 is a pin comprising a head, a tapered hole-forming portion, and a shaft having a particular cross-section. Such pin is satisfactory, but there is still a need to further develops such fastening elements. US8375549 discloses a method for establishing a nail connection between two components by means of a nail, which is driven into the components by a setting device at high speed.

The use of storage or secondary batteries, which can be charged and discharged, as a power source for vehicles has attracted considerable attention. High output and large capacity are needed for such secondary batteries to be used as the power source. For this reason, such batteries are typically constructed from a plurality of smaller battery cells (unit cells) that are interconnected in series or in parallel with each other to form a battery module. A plurality of battery modules is interconnected to obtain a battery pack having the desired output and capacity characteristics. In order to use battery packs of the type described above in various applications, including applications where the devices which are in power communication with the battery pack are subject to movement, such as, for example, various motorized vehicles, aircraft, watercraft, trains and the like, it is generally desirable to establish a battery mount which may be used to secure the battery pack to the device with which it is in power communication and also secure the battery modules that make up the battery pack with respect to one another. Using a mount to secure the battery pack and modules in the manner described enables electrical interconnection of the battery pack with the devices with which it is in powered communication. In some applications, it is also desirable that the mount provide physical protection for the battery pack, such that the battery modules are covered. Various types of battery mounts for mounting individual batteries are known including certain covered mounts. However, there is a need to provide systems enabling removal of individual battery modules from the battery pack casing, both during assembly of the battery pack and later in conjunction with service during the course of its operating life. For instance, the upper wall of the battery pack casing shall be removable.

To this end, EP2293362 discloses a battery tray that accepts a plurality of battery modules to form a battery pack, while also providing a combination of fixed and detachable retainers that enable insertion of individual battery modules into the battery pack and removal of individual battery modules from the battery pack.

However, the need of removable one-sided joining technology is increasing and the present invention aims to provide a fastener easily mounted in components, for example in vehicle battery subassemblies, which enables a removable strong joining facilitating the maintenance. More particularly, the invention provides a pin which can be used for many different applications, notably in the automotive industry and which can offer a strong joining and an easy reparation or maintenance. For instance, the pin could be used in battery pack carriers or housings and enables removal of individual battery modules from the battery pack, both during assembly of the battery pack and later in conjunction with service during the course of its operating life.

Accordingly, the present invention provides a pin for establishing a removable connection between at least two components according to claim 1. More particularly, the pin for establishing a removable connection between at least two components comprises a pin shaft extending along a longitudinal axis; a pin head, the diameter of the head being enlarged along other direction orthogonal to the longitudinal axis, wherein the pin head comprises an upper side, lateral edges and a transition portion is arranged between the lateral edges and the pin shaft; a pin tip formed on one end side of the pin shaft, the pin head formed at an end portion on the other end side; wherein the pin shaft comprises a first portion having a constant cross-section and a second portion having an enlarged cross-section with regard to the first portion , wherein the second portion extends between the transition portion and the first portion, and wherein the first portion extends between the pin tip and the second portion , wherein a thread is provided on the first portion, the second portion being at least in part a smooth portion .

Such pin, which can be produced in small dimension and be fastened by an automated joining machine. The different portions allow the pin to be removable without decreasing the robustness of the joint crated by the pin between the components.

In an embodiment, the second portion comprises a first segment having a non-constant cross-section and a second segment having a constant cross-section, the second segment extending between the first segment and the transition portion.

In an embodiment, the cross-section of the first segment increases from the first portion up to the second segment. Thus, the outer cross-section is gradually increased.

In an embodiment, the thread on the first portion is a first thread, and wherein the second segment is provided with a second thread.

In an embodiment, the pin's cross section outside dimension increases from the pin tip to the pin head.

According to the invention, the pin head comprises an engaging portion capable of engaging with a rotary tool. The pin is easily removable with the tool.

According to the invention, the engaging portion is formed by a recess provided on the head.

In an embodiment, the engaging portion is adapted to support a torque of a rotary tool of up to 8 Nm.

According to the invention, the pin tip is an ogival pin tip.

In an embodiment, the transition portion comprises a smooth surface.

In an embodiment, the second portion has a circular cross-section, and wherein the transition portion has a circular cross-section.

In an embodiment, a ratio of the second segment diameter and the first segment smallest diameter is between 1.02 and 1.3 or between 1.05 and 1.3, and in particular between 1.1 and 1.2.

In an embodiment, the pin is made in steel, and wherein the pin is coated with a ZnNi +B18 coating.

The present invention is also directed to a removal process. More particularly, the present invention is directed to a process for removing a pin from an arrangement comprising the steps of:
- providing an arrangement comprising at least two components a pin according to any of the preceding claims establishing a connection;
- providing a removing tool;
- unscrewing the pin from the arrangement with the removing tool.

In an embodiment, a new screw is set in the arrangement instead of the pin.

The present disclosure is also directed to a method for joining at least two components without a pre-formed hole with a setting tool having a punch and a pin according to any of the preceding claims, wherein the method comprises the following steps:
- providing a first and a second component, the first and the second components being at least partly positioned one on top of the other, potentially the first component being made in a high-strength material
- providing a setting tool with a punch and pin as disclosed above, wherein the pin is driven by the punch toward the first component along a joining axis, the pin firstly passing through the first component in the region of a joining area without pre-formed hole and then reaching the second component in the region of a joining area without pre-formed hole wherein, prior to the joining the first component in the region of the joining area is heat-treated, in particular via plasma, in such a way that a heat-affected zone is formed on the joining area of the first component, and in that the first component is heated in such a way that the strength of the first component in the heat-affected zone is reduced.

More particularly, the plasma allows a punctual heating of a joining area just before setting the pin. A strength of the first component in the heat-affected zone is reduced and thus a pin having a reduced cross-section can be used for the joining of high-strength materials. Due to heat conduction, further heat affected zone(s) may be formed in the lower sheets (or the lower component(s)). Besides, the pin remains substantially dimensionally stable during and after the joining. So, the joint is reliable.

Other characteristics and advantages of the invention will readily appear from the following description of embodiments, provided as non-limitative examples, in reference to the accompanying drawings:
Fig. 1 shows a first embodiment of a pin according to the invention, the pin comprising a flat countersunk head and a first thread;
Fig. 2A, Fig. 2B and Fig. 2C show a second, a third and a fourth embodiment of a pin according to the invention, the pin having respectfully a flat head, a countersunk head with a second thread and a flat head with a second thread;
Fig. 3 shows the top face of a head with an engaging portion according to an embodiment;
Fig. 4 schematically shows two components to be joined, the pin of Fig. 1 and a setting tool with a punch adapted to set the pin within the two components;
Fig. 5A schematically shows a removal tool removing a pin according to Fig. 1 set in two components;
Fig. 5B schematically shows the two components of Fig. 5A with a new fastener being installed instead of the pin of Fig. 1 and a setting tool.

On the different figures, the same reference signs designate identical or similar elements.

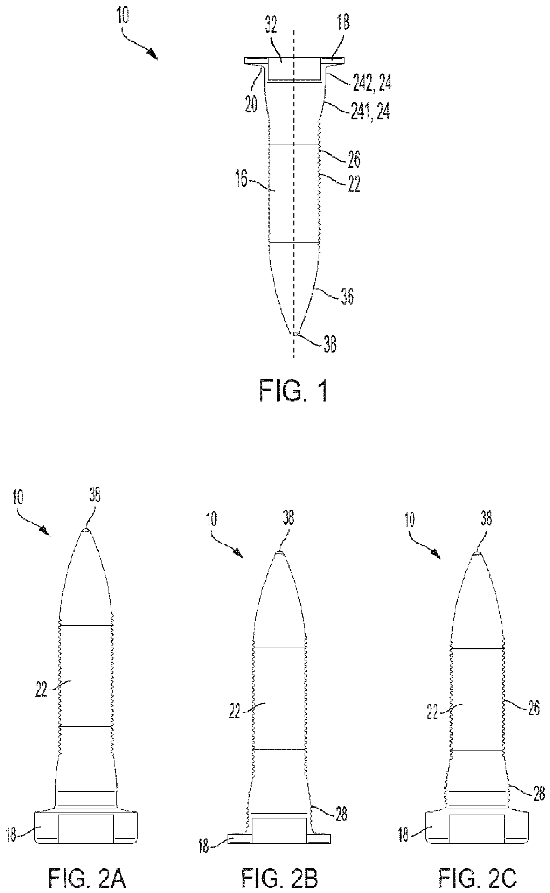

Fig. 1 shows a first embodiment of a pin 10 for establishing a removable connection between two components 12, 14. The pin 10 comprises a pin shaft 16 extending along a longitudinal axis X and a pin head 18. The diameter of the pin head 18 is enlarged along other direction orthogonal to the longitudinal axis X. The pin head comprises a first surface opposite the pin shaft 16, lateral edges and a transition portion 20. The transition portion 20 is arranged between the lateral edges and the pin shaft 16. The transition portion corresponds to the underside of the pin head 18.

As depicted in the first embodiment of the pin 10 of Fig. 1, the pin 10 has a flat countersunk head.

In the second embodiment of the pin, depicted in Fig. 2A, the pin 10 has a flat head. The others technical features of the pin of Fig. 2A are identical or substantially identical to the features depicted in relation with the first embodiment of Fig. 1, unless otherwise specified.

The pin shaft 16 comprises a first portion 22 having a constant cross-section and a second portion 24 having an enlarged cross-section with regard to the first portion 22. The second portion 24 extends between the transition portion 20 and the first portion 22.

The first portion 22 may for instance have a circular cross-section. However, other cross-sections may also be implemented, and for instance a triabolic cross-section. The first portion 22 may have a constant cross-section along its length.

A thread, forming a first thread 26, and more particularly a first external thread is arranged on the first portion 22. For instance, the first thread 26 extends on the entire length of the first portion 22. The first thread 26 may be a standard thread, a fine thread or a thread with a reduced depth. For instance, for a fine M3 thread, the outer diameter of the first thread 26 may be between 2.6 and 3.0 mm, and more particularly between 2.7 and 2.9, a pitch of 0.25 or 0.35 and an inner diameter between 2.2 mm and 2.8 mm, and in particular between 2.5 and 2.7 mm. For example, for a thread close to the standard M3, the pitch may be of 0.50 mm, the outer diameter of 2.7 to 3.0 mm and the inner diameter between 2.2 and 2.8 mm, and in particular between 2.5 and 2.7 mm. Other threaded profiles may also be implemented.

The second portion 24 comprises a first segment 241 and a second segment 242, extending from the first segment 241. The first segment 241 comprises a non-constant cross-section. The second segment 242 comprises a constant cross-section. The second segment 242 extends between the first segment 241 and the transition portion 20. For instance, the cross-section (and more particularly the outer cross-section) of the first segment 241 increases from the first portion 22 up to the second segment 242. The increase may be constant (for instance the first segment may have a conical shape) or not. For instance, as depicted in Fig. 1, the first segment 241 may present an ogivalism. The ogival factor is for example between 2.9 and 3.1 ( sharpness of the ogive expressed by the ratio of its radius to the diameter of the cylinder).

The first segment 241 and/or the second segment 242 has a circular cross-section. In other embodiments, the first segment 241 and/or the second segment 242 may have an oval cross-section or a polygonal cross-section or a multilobic cross-section, for instance a trilobic cross-section.

The second segment 242 may for instance have a diameter between 3 and 3.5 mm, and more particularly of about 3.3 mm. The minimum diameter of the first segment 241 may be between 2.5 and 3 mm, and more particularly of about 2.9 mm. The second segment 242 may extend longitudinally over a second segment length of about 0.5 mm. Depending on the thickness or number of components to be joined, the second segment length may vary. In an embodiment, the second segment may not be present. For instance, in the third and fourth embodiments of the pin as depicted respectively in Fig. 2B and Fig. 2C, the second segment 242 is provided with a thread, notably an external thread. More particularly, the thread on the second segment forms a second thread 28. The pitch second thread 28 may be identical to the pitch first thread 26. In another embodiment, the second thread 28 is different from the first thread 26. The other technical features of the third and fourth embodiments of the pin are substantially identical to those depicted in relation to Fig. 1 or Fig. 2A (unless otherwise mentioned below).

The pin head 18 may have a circular cross-section and a diameter of about 5.5mm. More particularly, the pin head 18 has an outer surface 30 large enough such that the pin 10 may be punched into a component or workpiece by a setting machine. The pin head 18 may be a countersunk head, as visible in Fig. 1 and Fig. 2B. In another embodiment, the pin head 18 may be a flat head as visible in Fig. 2A and Fig. 2C.

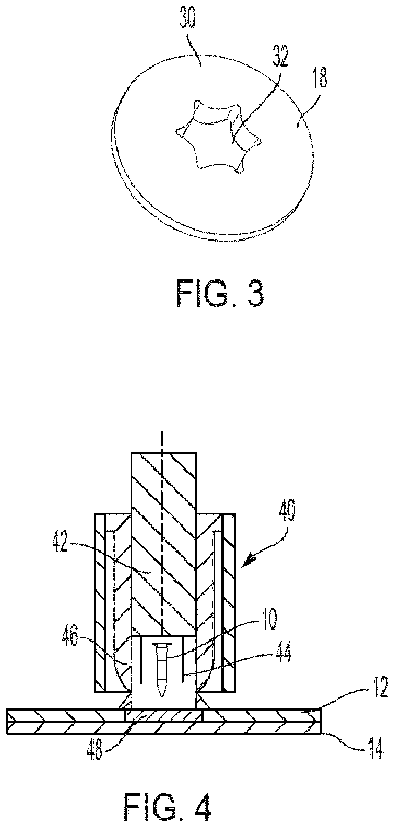

The pin head 18 comprises an engaging portion 32 adapted to receive a removal tool 34, as visible in Fig. 3. The removal tool 34 may be for instance a rotary tool. The engaging portion 32 is for instance formed by a recess 321 provided on the head. The recess 321 may be a square hole or a hexagon hole or any other hole shape suitable for transmission of torque up to 8 Newtonmeters (Nm). For instance, a 6-point star-shaped pattern may also be used.

In another embodiment (not represented), the engaging portion may be defined by the outer edge of the pin head.

As depicted in Fig. 1 or Fig. 2B, the recess 321 forming the engaging portion extends in part in the second portion 24, and more particularly in the second segment 242 (eventually also in the first segment 241).

In other embodiments, and as visible for instance in Fig. 2A and Fig. 2C, the recess forming the engaging portion extends only in the thickness of the pin head 18.

The transition portion 20 extends between the lateral edges of the pin head and the second portion 24, and more particularly the second segment 242 of the second portion 24.

The transition portion 20 may extend in a plane substantially orthogonal to the longitudinal axis (in cross-section), or may form an angle with it or a radius of curvature may exist. The transition portion is defined by the underside of the head (facing the shaft).

A pin head 18 is arranged at an end portion of the pin 10, wherein at the other end of the pin, a pin tip 36 is formed. The first portion 22 is arranged between the pin tip 36 and the second portion 24. The pin tip 36 may be for instance an ogival tip. The pin tip 36 may be provided with a thread run-out. For instance, the pin tip has an ogival surface with a rounded end point 38. The ogival factor is for example between 4.5 and 5.

In an embodiment, the pin 10 may be a flow-hole and thread-forming screw. The pin may also be a cold forming as well as a flow forming screw or a flow punch forming screw. The pin10 is a one-piece element made of steel, notably low alloyed steel, and more particularly 37MnB4 (DIN/EN materials 45B2 or C60 or C65 are also possible materials). The pin may be for instance coated with a galvanic applied coating such that ZnNi+B18.

The pin 10, from the outer surface of the pin head 18 to the end point 38 of the pin end has a total length along the longitudinal axis of about 15 mm for the first and second embodiments, and of about 14 mm for the third and fourth embodiment.

The pin 10 is notably used for joining at least two components 12, 14 without a pre-formed hole with a setting tool 40 having a punch 42, as schematically disclosed in Fig. 4. The setting tool comprises for instance a punch and a plasma torch or other equivalent equipment. The setting tool 40 comprises also a pin holder 44 to hold and guide the pin. In order to realize a joint between the two components, the setting tool is arranged above a joining area of the first component (upper component). For instance the plasma torch 46 points locally to the joining area. The thermal energy fed to the upper component via the plasma torch heats the joining area 48 of the first component 12 (and potentially the second component) in such a way that a strength of the first component 12 (and optionally a strength of the second component) is (are) reduced and/or the ductility of the material(s) is/are increased. Once the strength of the first component 12 is reduced, the pin 10 is pressed via the punch through the first component toward the second component 14. The feed motion is stopped when the pin is fully inserted into the at least two components to form the joint. The lower component is the screw-in part, the upper component(s) is/are then the clamping parts. The size of the joining area 48 and the locally reduced strength of the at least first component 12 allows to reduce the joining force and to maintain a pin during and after the joining step which is dimensionally substantially stable. In an embodiment (not shown), the pin may be set within the workpiece arrangement with a rotation or a combination of rotation and translation.

A thermal shrinkage around the pin 10 can compensate the locally reduced strength of the component. Such method and such pin allows the joining of components made of a material with a tensile strength of for instance 2000 MPa.

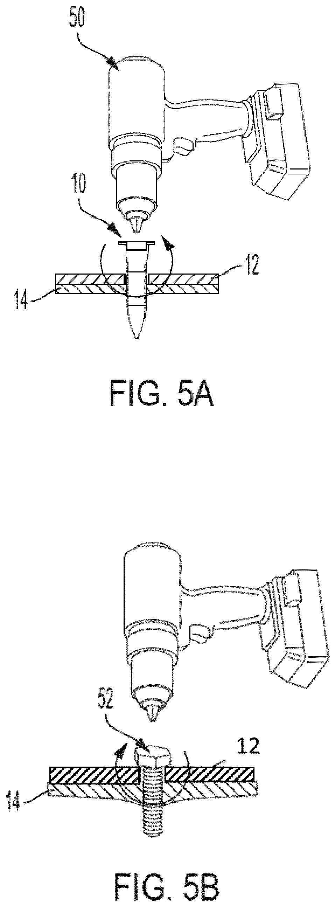

Fig. 5A schematically shows the pin 10 being removed from the two components 12, 14 by a removal tool 50. A bit of a removal tool 50 engages with the engaging portion to apply a torque to the pin set in the two components 12, 14. The pin 10 is thus unscrewed from the hole formed in the first and second components. Once the pin 10 has been removed, a maintenance or repair of the components may occur. For instance, the first and second components 12, 14 may be separated. The upper component 12 may for instance be a lid or cover of a casing. The lid can be removed, a repair inside the casing (or any other casing) may be undertaken. The lid or cover may then be replaced such that the holes formed originally by the pin in the first and second components are aligned. A new fastener 52 (for instance a screw adapted to fit the hole left by the pin, notably a M3 screw), may then be used and screwed into the holes left by the pin in order to re-join first and second components.

The pin 10 may for instance be used for a battery pack casing, the upper component being a lid or cover of the casing. Once open, a maintenance or change of module may be undertaken inside the battery pack casing. Once done, the lid is replaced and the casing is closed with a new screw. Due to the enlarged portion of the original pin, the hole formed in the workpieces is greater on the upper or top workpiece. The new screw with thus clamp the workpieces, as notably depicted in Fig. 5B.
pin 10
components 12, 14
pin shaft 16
longitudinal axis X
pin head 18
transition portion 20
first portion 22
second portion 24
first thread 26
first segment 241
second segment 242
second thread 28
outer surface 30
engaging portion 32
removal tool 34
recess 321
pin tip 36
end point 38
setting tool 40
punch 42
pin holder 44
plasma torch 46
joining area 48
removal tool 50
new fastener 52

## Claims

1. Pin (10) for establishing a removable connection between at least two components comprising:
a pin shaft (22) extending along a longitudinal axis,
a pin head (18), the diameter of the head being enlarged along other direction orthogonal to the longitudinal axis, wherein the pin head comprises an upper side, lateral edges and a transition portion is arranged between the lateral edges and the pin shaft,
a pin tip (38) formed on one end side of the pin shaft, the pin head formed at an end portion on the other end side,
wherein the pin shaft comprises a first portion (22) having a constant cross-section and a second portion (24) having an enlarged outer cross-section with regard to the first portion, wherein the second portion extends between the transition portion and the first portion, and wherein the first portion extends between the pin tip and the second portion,
wherein a thread is provided on the first portion, the second portion being at least in part a smooth portion,
wherein the pin head (18) comprises an engaging portion (32) capable of engaging with a rotary tool, the engaging portion (32) being formed by a recess (321) provided on the head, and
wherein the pin tip is an ogival pin tip.

2. Pin (10) according to claim 1, wherein the second portion (24) comprises a first segment (241) having a non-constant outer cross-section and a second segment (242) having a constant outer cross-section, the second segment extending between the first segment and the transition portion.

3. Pin (10) according to claim 2, wherein the cross-section of the first segment increases from the first portion up to the second segment.

4. Pin (10) according to claim 2 or 3, wherein the second segment has a circular outer cross-section, and wherein the first segment has a circular outer cross-section.

5. Pin (10) according to claim 4, wherein a ratio of the second segment diameter and the first segment smallest diameter is between 1.05 and 1.3, and in particular between 1.1 and 1.2.

6. Pin (10) according to any of claims 1 to 5, wherein the thread on the first portion is a first thread, and wherein the second segment is provided with a second thread.

7. Pin (10) according to any of claims 1 to 6, wherein the pin's cross section outside dimension increases from the pin tip to the pin head.

8. Pin (10) according to any of claims 1 to 7, wherein the engaging portion is adapted to support a torque of a rotary tool of up to 8 Nm

9. Pin (10) according to any of the preceding claims, wherein the transition portion comprises a smooth surface.

10. Pin (10) according to any of the preceding claims, wherein the pin is made in steel, and wherein the pin is coated with a ZnNi +B18 coating.

11. Process for removing a pin (10) from an arrangement comprising the steps of:
- providing an arrangement comprising at least two components and a pin (10) according to any of the preceding claims establishing a connection;
- providing a removing tool;
- unscrewing the pin from the arrangement with the removing tool.

12. Process according to claim 11, wherein a new screw is set in the arrangement instead of the pin (10).

## Patentansprüche

1. Stift (10) zum Herstellen einer lösbaren Verbindung zwischen mindestens zwei Komponenten, umfassend:
ein Stiftschaft (22), der sich entlang einer Längsachse erstreckt,
einen Stiftkopf (18), wobei der Durchmesser des Kopfs entlang einer anderen, zur Längsachse orthogonalen Richtung vergrößert ist, wobei der Stiftkopf eine Oberseite, Seitenkanten und einen Übergangsabschnitt zwischen den Seitenkanten und dem Stiftschaft umfasst,
eine Stiftspitze (38), die an einer Endseite des Stiftschafts gebildet ist, wobei der Stiftkopf an einem Endabschnitt an der anderen Endseite gebildet ist,
wobei der Stiftschaft einen ersten Abschnitt (22) umfasst, der einen konstanten Querschnitt aufweist, und einen zweiten Abschnitt (24), der in Bezug auf den ersten Abschnitt einen vergrößerten Außenquerschnitt aufweist, wobei sich der zweite Abschnitt zwischen dem Übergangsabschnitt und dem ersten Abschnitt erstreckt, und wobei sich der erste Abschnitt sich zwischen der Stiftspitze und dem zweiten Abschnitt erstreckt,
wobei auf dem ersten Abschnitt ein Gewinde bereitgestellt ist, wobei der zweite Abschnitt mindestens teilweise ein glatter Abschnitt ist,
wobei der Stiftkopf (18) einen Eingriffsabschnitt (32) umfasst, der fähig ist, in ein Drehwerkzeug einzugreifen, wobei der Eingriffsabschnitt (32) durch eine Aussparung (321) gebildet ist, die am Kopf bereitgestellt ist, und
wobei die Stiftspitze eine ogivale Stiftspitze ist.

2. Stift (10) nach Anspruch 1, wobei der zweite Abschnitt (24) ein erstes Segment (241) umfasst, das einen nicht konstanten Außenquerschnitt aufweist, und ein zweites Segment (242), das einen konstanten Außenquerschnitt aufweist, wobei sich das zweite Segment zwischen dem ersten Segment und dem Übergangsabschnitt erstreckt.

3. Stift (10) nach Anspruch 2, wobei der Querschnitt des ersten Segments vom ersten Abschnitt bis zum zweiten Segment zunimmt.

4. Stift (10) nach Anspruch 2 oder 3, wobei das zweite Segment einen kreisförmigen Außenquerschnitt aufweist, und wobei das erste Segment einen kreisförmigen Außenquerschnitt aufweist.

5. Stift (10) nach Anspruch 4, wobei ein Verhältnis des Durchmessers des zweiten Segments zum kleinsten Durchmesser des ersten Segments zwischen 1,05 und 1,3 und insbesondere zwischen 1,1 und 1,2 beträgt.

6. Stift (10) nach einem der Ansprüche 1 bis 5, wobei das Gewinde am ersten Abschnitt ein erstes Gewinde ist, und wobei das zweite Segment mit einem zweiten Gewinde bereitgestellt ist.

7. Stift (10) nach einem der Ansprüche 1 bis 6, wobei die äußere Abmessung des Außenquerschnitts des Stifts von der Stiftspitze zum Stiftkopf hin zunimmt.

8. Stift (10) nach einem der Ansprüche 1 bis 7, wobei der Eingriffsabschnitt so angepasst ist, dass er ein Drehmoment eines Drehwerkzeugs von bis zu 8 Nm trägt.

9. Stift (10) nach einem der vorstehenden Ansprüche, wobei der Übergangsabschnitt eine glatte Oberfläche umfasst.

10. Stift (10) nach einem der vorstehenden Ansprüche, wobei der Stift aus Stahl gefertigt ist, und wobei der Stift mit einer ZnNi+B18-Beschichtung beschichtet ist.

11. Verfahren zum Entfernen eines Stifts (10) aus einer Anordnung, umfassend die folgenden Schritte:
- Bereitstellen einer Anordnung, die mindestens zwei Komponenten und einen Stift (10) nach einem der vorstehenden Ansprüche umfasst und eine Verbindung herstellt;
- Bereitstellen eines Entnahmewerkzeugs;
- Herausschrauben des Stifts aus der Anordnung mit dem Entnahmewerkzeug.

12. Verfahren nach Anspruch 11, wobei anstelle des Stifts (10) eine neue Schraube in die Anordnung eingesetzt wird.

## Revendications

1. Broche (10) pour établir une connexion amovible entre au moins deux composants comprenant :
une tige de broche (22) s'étendant le long d'un axe longitudinal,
une tête de broche (18), le diamètre de la tête étant élargi le long d'une autre direction orthogonale à l'axe longitudinal, dans laquelle la tête de broche comprend un côté supérieur, des bords latéraux et une portion de transition est agencée entre les bords latéraux et la tige de broche,
une pointe de broche (38) formée sur un côté d'extrémité de la tige de broche, la tête de broche étant formée à une portion d'extrémité sur l'autre extrémité de côté,
dans laquelle la tige de broche comprend une première portion (22) présentant une section transversale constante et une seconde portion (24) présentant une section transversale extérieure élargie par rapport à la première portion, dans laquelle la seconde portion s'étend entre la portion de transition et la première portion, et dans laquelle la première portion s'étend entre l'extrémité de broche et la seconde portion,
dans laquelle un filetage est fourni sur la première portion, la seconde portion étant au moins en partie une portion lisse,
dans laquelle la tête de broche (18) comprend une portion de mise en prise (32) capable de se mettre en prise avec un outil rotatif, la portion de mise en prise (32) étant formée par un évidement (321) fourni sur la tête, et
dans laquelle l'extrémité de broche est une pointe de broche ogivale.

2. Broche (10) selon la revendication 1, dans laquelle la seconde portion (24) comprend un premier segment (241) présentant une section transversale extérieure non constante et un second segment (242) présentant une section transversale extérieure constante, le second segment s'étendant entre le premier segment et la portion de transition.

3. Broche (10) selon la revendication 2, dans laquelle la section transversale du premier segment augmente de la première portion jusqu'au second segment.

4. Broche (10) selon la revendication 2 ou 3, dans laquelle le second segment présente une section transversale extérieure circulaire, et dans laquelle le premier segment présente une section transversale extérieure circulaire.

5. Broche (10) selon la revendication 4, dans laquelle un rapport du diamètre de second segment et du plus petit diamètre de premier segment est entre 1,05 et 1,3, et en particulier entre 1,1 et 1,2.

6. Broche (10) selon l'une quelconque des revendications 1 à 5, dans laquelle le filetage sur la première portion est un premier filetage, et dans laquelle le second segment est pourvu d'un second filetage.

7. Broche (10) selon l'une quelconque des revendications 1 à 6, dans laquelle la dimension extérieure de section transversale de la broche augmente de la pointe de broche à la tête de broche.

8. Broche (10) selon l'une quelconque des revendications 1 à 7, dans laquelle la portion de mise en prise est adaptée pour supporter un couple d'un outil rotatif jusqu'à 8 Nm.

9. Broche (10) selon l'une quelconque des revendications précédentes, dans laquelle la portion de transition comprend une surface lisse.

10. Broche (10) selon l'une quelconque des revendications précédentes, dans laquelle la broche est faite en acier et dans laquelle la broche est revêtue d'un revêtement de ZnNi +B18.

11. Procédé de retrait d'une broche (10) d'un agencement comprenant les étapes de :
- fourniture d'un agencement comprenant au moins deux composants et une broche (10) selon l'une quelconque des revendications précédentes établissant une connexion ;
- fourniture d'un outil de retrait ;
- dévissage de la broche de l'agencement avec l'outil de retrait.

12. Procédé selon la revendication 11, dans lequel une nouvelle vis est placée dans l'agencement à la place de la broche (10).
